# EUROPÄISCHE PATENTSCHRIFT

(11) **EP 0 897 121 B1**
(45) Veröffentlichungstag und Bekanntmachung des Hinweises auf die Patenterteilung: **10.11.2004**
(21) Anmeldenummer: 98114496.7
(22) Anmeldetag: 01.08.1998
(51) Int. Cl.: G01S 7/497, G01S 7/481, G02B 26/08, G01S 17/42

(54) **Vorrichtung zum Orten von in einen zu Überwachenden Raumbereich eindringenden Objekten**
Apparatus for localisation of objects penetrating a monitored space
Dispositif pour localiser l'entrée d'objets dans un domaine spatial surveillé

(30) Priorität: 13.08.1997 DE 19735037
(43) Veröffentlichungstag der Anmeldung: 17.02.1999
(73) Patentinhaber: SICK AG, 79183 Waldkirch (DE)
(72) Erfinder: Jakob, Hermann, 79297 Winden (DE); Meinert, Thomas, 79312 Emmendingen (DE)

(56) Entgegenhaltungen:
- EP-A- 0 544 945
- DE-A- 2 454 461
- DE-A- 19 530 281
- US-A- 5 337 189
- US-A- 5 455 669
- TANAKA S ET AL: "SCANNING LASER RADAR FOR ON-THE-ROAD DISTANCE MEASURING" AUTOMOTIVE ENGINEERING,US,SOCIETY OF AUTOMOTIVE ENGINEERS. WARRENDALE, Bd. 105, Nr. 7, Seite 49-52 XP000698840 ISSN: 0098-2571

## Beschreibung

Die Erfindung betrifft eine Vorrichtung zum Orten von in einen zu überwachenden Raumbereich eindringenden Objekten nach dem Anspruch 1.

Eine derartige Vorrichtung ist aus DE-A-4 340 756 bekannt, bei der ein Gehäuse mit einem sich über einen Winkel von 180° erstreckendes Fenster vorgesehen ist, das zur ausgesendeten optischen Strahlung schräg gestellt und mit einem unterseitigen, abgewinkelten Randbereich versehen ist. Entlang des Umfangs des Fensters sind Lichtschranken angeordnet, deren Strahlung das Fenster und dessen Randbereich passieren, um so eventuelle Verschmutzungen festzustellen. Die von der Ablenkvorrichtung unter veränderlichem Winkel umgelenkte Strahlung wird bei Transmission an den beiden Grenzflächen des Fensters zum Teil reflektiert. Durch Schrägstellung des Fensters wird zwar vermieden, daß dieser Strahlungsanteil unbeabsichtigt auf den Empfänger fällt und Störungen verursacht, jedoch bewirkt diese Schrägstellung der Grenzflächen zum einfallenden Strahlenbündel, daß ihre optische Wirkung in den beiden Hauptschnittebenen (Meridional- und Sagittalebene) unterschiedlich ist und sich damit eine astigmatische Wirkung einstellt. Insbesondere bei dickeren Wandstärken des Fensters und hohen Ansprüchen an die Strahlführung führt dies zu einer maßgeblichen Einschränkung. Außerdem können an verschmutzten Stellen der optischen Umlenkeinrichtung oder an dort vorhandenen Körperkanten gestreute bzw. gebeugte Strahlung durch Reflexion am Fenster auf den Empfänger gelangen.

Eine weitere Vorrichtung zum Orten von in einen zu überwachenden Raumbereich eindringenden Objekten ist aus DE-A-4 315 077 bekannt, bei der eine um eine Achse drehbare, optische Umlenkeinrichtung aus zwei zueinander senkrecht angeordneten Spiegeln vorgesehen ist, wobei ein in einem Winkel von 45° zur Drehachse angeordneter Spiegel ein Strahlenbündel in einen zu überwachenden Bereich aussendet, während der andere, senkrecht zum vorstehend erwähnten angeordnete Spiegel ein aus dem zu überwachenden Bereich reflektiertes Strahlenbündel über einen Hohlspiegel auf einen in dessen Brennpunkt angeordneten Empfänger wirft. Wenn man diese Vorrichtung in einem mit einem Fenster versehenen Gehäuse unterbringt, treten die gleichen Probleme auf, die bereits vorstehend diskutiert wurden.

Aus DE-A-19 530 281 ist eine Vorrichtung zum optischen Erfassen von Hindernissen von Fahrzeugen bekannt, die einen in einem Gehäuse angeordneten Scanner umfaßt, wobei das Gehäuse mit einer gewölbten Frontscheibe zum Abschluß gegen Witterungseinflüsse entsprechend einer Scheinwerferfrontscheibe versehen ist.

Aufgabe der Erfindung ist es, eine Vorrichtung nach dem Oberbegriff des Anspruchs 1 zu schaffen, bei der das Auftreffen von am Fenster reflektierter Strahlung auf den Empfänger ebenso wie das Auftreten einer astigmatischen Wirkung bezüglich des ausgesendeten Strahlenbündels vermieden wird.

Diese Aufgabe wird entsprechend dem Anspruch 1 gelöst.

Durch die Verwendung eines Fensters in Form eines Kugelausschnitts, dessen Mittelpunkt der Schnittpunkt der Drehachse mit den optischen Achsen des ein- und ausfallenden Strahlenbündels ist, ergeben sich zu diesem Schnittpunkt äquidistante Grenzflächen des Fensters, so daß daran reflektiertes Licht des ausfallenden Strahlenbüdels in sich selbst zurückreflektiert wird, wobei die optische Wirkung dieser Grenzflächen bezüglich eines ausgesendeten Strahlenbündels in jeder Schnittebene durch den Kugelmittelpunkt exakt gleich ist, wodurch keine astigmatische Wirkung auftreten kann. An eventuell verschmutzten Stellen des Sendeumlenkspiegels oder an dort vorhandenen Körperkanten gestreute bzw. gebeugte Strahlung des gesendeten Strahlenbündels wird durch das kugelausschnittförmige Fenster im Maßstab 1:1 in sich selbst abgebildet und kann daher nicht zum Empfänger gelangen.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt schematisiert eine Ausführungsform einer Vorrichtung zum Orten von in einen zu überwachenden Raumbereich eindringenden Objekten.
Fig. 2 zeigt die Vorrichtung von Fig. 1 in einer Ansicht von rechts bezüglich Fig. 1.
Fig. 3 zeigt schematisch den Strahlenverlauf bei einem gemäß der Vorrichtung von Fig. 1 verwendeten Fenster.

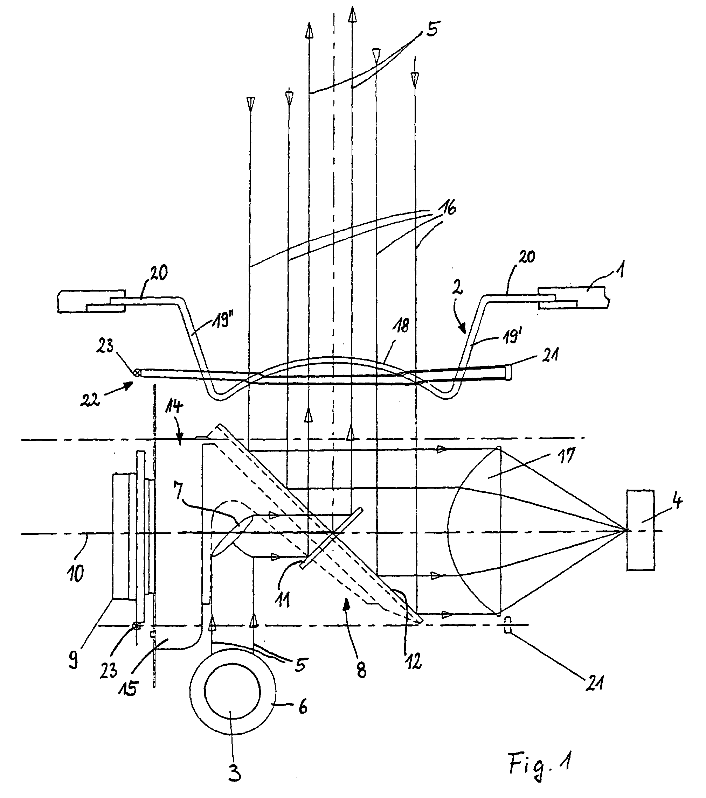

Die in Fig. 1 dargestellte Vorrichtung umfaßt ein Gehäuse 1, das zu einem zu überwachenden Raumbereich hin mit einem Fenster 2 versehen ist. Innerhalb des Gehäuses 1 befindet sich ein Sender 3 und ein Empfänger 4 für optische Strahlung, insbesondere (gepulste) Laserstrahlung. Ein vom Sender 3 ausgesendetes Strahlenbündel 5 wird über eine Kollimatoroptik 6 und zwei planen, um 45° geneigten Justage- und Umlenkspiegel 7 auf eine optische Umlenkeinrichtung 8 geworfen. Die Umlenkeinrichtung 8 ist über einen Motor 9 um eine Drehachse 10 drehbar.

Die Umlenkeinrichtung 8 umfaßt einen Sendeumlenkspiegel 11 und einen in bezug hierzu feststehend und senkrecht montierten Empfangsumlenkspiegel 12. Die planen Sende- und Empfangsumlenkspiegel 11, 12 sind beide in einem Winkel von 45° zur Drehachse 10 geneigt angeordnet, wobei der Empfangsumlenkspiegel 12 eine mittige Ausnehmung 13 aufweist, in der der Sendeumlenkspiegel 11 angeordnet ist.

Sende- und Empfangsumlenkspiegel 11, 12 sind auf einem Träger 14 befestigt, dessen Fuß 15 mit einem Motor 9 gekoppelt ist, um die Umlenkeinrichtung 8 um die Drehachse 10 zu drehen.

Vom Sendeumlenkspiegel 11 wird das Strahlenbündel 5 durch das Fenster 2 in den zu überwachenden Raumbereich reflektiert und überstreicht infolge der kontinuierlichen Drehung der Umlenkreinrichtung 8 den zu überwachenden Raumbereich.

Ein von einem Objekt im zu überwachenden Raumbereich reflektiertes Strahlenbündel 16 tritt durch das Fenster 2 in das Gehäuse 1 ein und fällt auf einem Empfangsumlenkspiegel 12, von dem es auf einen Empfangskollimator 17 fällt, der das Strahlenbündel 16 auf den Empfänger 4 bündelt, der die An- oder Abwesenheit eines Objektes im zu überwachenden Raumbereich feststellt.

Das Fenster 2 ist langgestreckt, von gleichbleibender Höhe und Stärke und führt beispielsweise zu einem Abtastbereich, der sich über etwa 180° senkrecht zur Drehachse 10 erstreckt. Der Abtastbereich des ausgesendeten Strahlenbündels 5 wird durch einen Mittelabschnitt 18 des Fensters 2 in Form eines Kugelausschnitts begrenzt, dessen Mittelpunkt der Schnittpunkt der Drehachse 10 mit den optischen Achsen des ein- und ausfallenden Strahlenbündels 5, 16 ist.

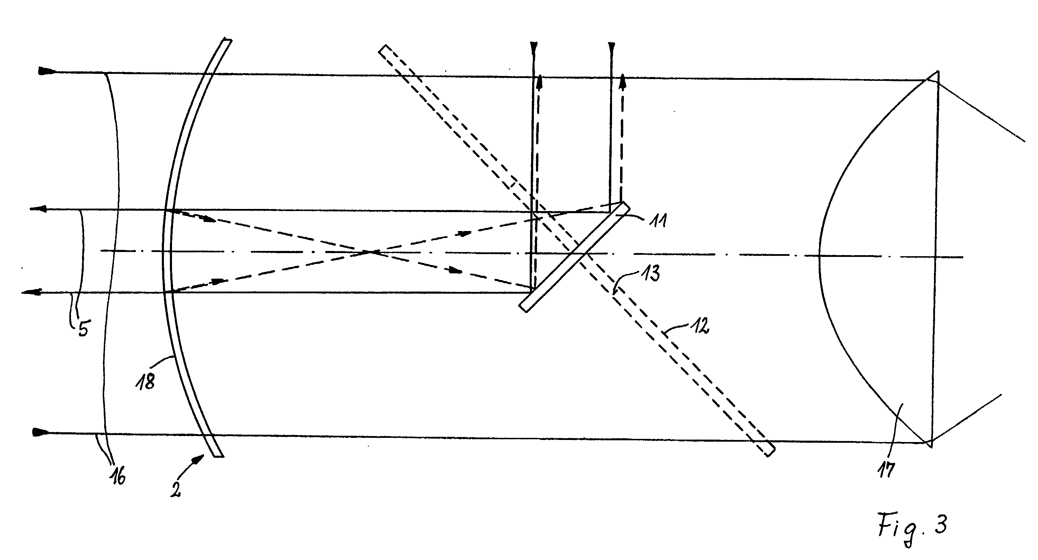

Hierdurch wird, wie in Fig. 3 dargestellt, das vom Sendeumlenkspiegel 11 reflektierte Strahlenbündel 5 teilweise an den beiden sphärischen und äquidistanten Grenzflächen des kugelausschnittförmigen Mittelabschnitts 18 des Fensters 2 reflektiert und im Brennpunkt F dieser Kugelflächen fokussiert, so daß diese am Fenster 2 reflektierte Strahlung in sich selbst zurückreflektiert wird und somit keine Störungen verursacht.

Außerdem besteht ein weiterer Vorteil der äquidistanten Grenzflächen des kugelausschnittförmigen Mittelabschnitts 18 des Fensters 2 darin, daß ihre optische Wirkung bezüglich des gesendeten Strahlenbündels 5 in jeder Schnittebene durch den Kugelmittelpunkt exakt gleich ist, so daß keine astigmatische Wirkung eintritt.

An eventuell verschmutzten Stellen des Sendeumlenkspiegels 11 oder an dessen Kanten gestreute oder gebeugte Strahlung wird ebenfalls im Maßstab 1:1 durch die äquidistanten Grenzflächen des kugelausschnittförmigen Mittelabschnitts 18 des Fensters 2 in sich selbst abgebildet, so daß auch diese Sendestrahlungsanteile durch Reflexion am Fenster 2 nicht zum Empfänger 4 gelangen können.

Vorteilhafterweise schließt sich an den Mittelabschnitt 18 des Fensters 2 ein umlaufender, sich in Richtung der Konvexität des Fensters 2, d.h. auswärts erstreckender Randbereich 19', 19" an, der in einen Umfangsflansch 20 übergeht. Hierdurch läßt sich eine wirksame Verschmutzungsmessung des Fensters 2 vornehmen, wie nachfolgend beschrieben wird.

Entlang eines sich über etwa 180° erstreckenden Randbereichs 19' des Fensters 2 im Halbkreis um die Drehachse 10 ist im Gehäuse 1 eine ringförmige Anordnung von Empfängern 21 vorgesehen, die optische Strahlung, insbesondere IR-Strahlung, von einer im Gehäuse 1 entlang des gegenüberliegenden Randbereichs 19" ebenfalls im Halbkreis um die Drehachse 10 angeordneten Verschmutzungsmessungssenderanordnung 22 empfängt, die den Mittelabschnitt 18 zweimal sowie die gegenüberliegenden Randbereiche 19', 19'' des Fensters 2 passiert hat.

Verschmutzungsmessungssender 23 der Verschmutzungsmessungssenderanordnung 22 können hierbei ebenfalls ringförmig entlang des entsprechenden Randbereichs 19" des Fensters 2 angeordnet sein, wobei diese und die zugehörigen Empfänger 21 im Multiplexbetrieb betrieben werden.

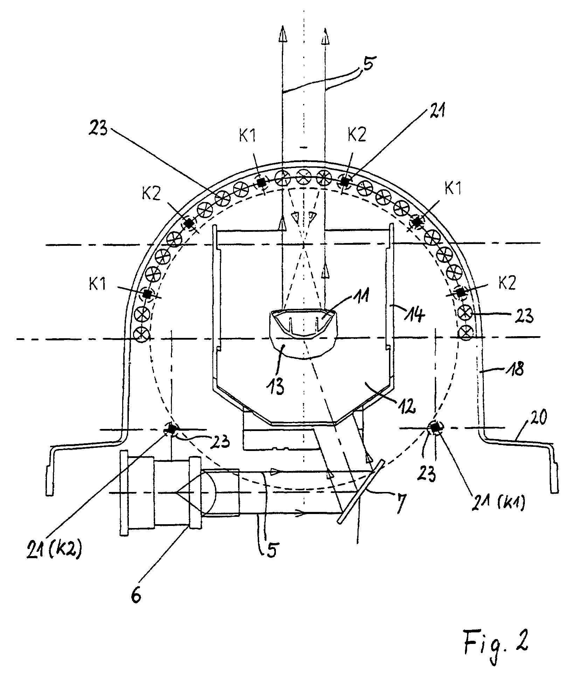

Allerdings nutzt man hierbei vorteilhaft die von einem Verschmutzungsmessungssender 23 ausgestrahlte Lichtkeule, indem mehrere Verschmutzungsmessungssender 23 (etwa Subminiatur-Infrarotdioden) einem einzelnen Empfänger 21 (etwa SI-PIN-Dioden) zugeordnet sind, d.h. man verwendet beispielsweise 25 Verschmutzungsmessungssender 23 und 6 Empfänger 21, die jeweils äquidistant zueinander angeordnet sind. Als Verschmutzungsmessungssender 23 verwendete Dioden haben beispielsweise einen Abstrahlwinkel von etwa 20° (Halbwertsbreite). Die Empfänger 21 sind mit dem jeweils übernächst angeordneten Empfänger 21 parallel verschaltet, so daß jeweils zwei aktive Empfangssysteme K1, K2 (vgl. Fig. 2) vorhanden sind. Die Verschmutzungsmessungssender 23 werden im Zeitmultiplex betrieben, so daß sich zu einem diskreten Zeitpunkt "Strahlungskanäle" zwischen Verschmutzungsmessungssender 23 und Empfänger 21 bilden, die das Fenster 2 zweimal durchdringen, wobei eine Verschmutzung in einer oder beiden durchdrungenen Zonen zu einer Signaldämpfung am entsprechenden Empfänger 21 führt.

Der Abstrahlwinkel der Verschmutzungsmessungssender 23 und der Abstand zwischen 2 parallelgeschalteten Empfängern 21 ist zweckmäßigerweise so gewählt, daß bei keiner Verschmutzungsmessungssenderansteuerung zwei Empfänger 21 eines Empfangssystems mit Strahlung beaufschlagt werden können.

Auf diese Weise läßt sich eine Verschmutzungsmessung vor allem auch der Randzonen des Mittelbereichs 18 des Fensters 2 vornehmen, da Verschmutzungen in der Kernzone des Fensters 2 gegebenenfalls vom Empfänger 4 selbst detektiert werden können.

Um das Angeschaltetsein bzw. die Funktionsfähigkeit der beiden Emfangssysteme K1, K2 zu kontrollieren, können entsprechende Referenzsender-Empfänger 21(K1) bzw. 21(K2), 23 vorgesehen sein.

Anstelle der Verwendung von Verschmutzungsmessungssendern 23 läßt sich auch ein aus dem gesendeten Strahlenbündel 5 ausgeblendeter Verschmutzungsmessungsstrahl oder ein von einem einzelnen Verschmutzungsmessungssender entsprechend ausgesendeter Verschmutzungsmessungsstrahl verwenden, der über einen entsprechenden Umlenkspiegel, der sich beispielsweise mit der Umlenkeinrichtung 8 dreht, um die Drehachse 10 rotierend den Mittelabschnitt 18 mindestens einmal und mindestens einen Randbereich 19', 19" passierend von entsprechenden Empfängern 21 detektiert wird. Hierbei kann zwischen Umlenkspiegel und den Empfängern 21 eine gleichmäßig rückstreuende Fläche im Gehäuse 1 angeordnet sein, auf die der vom Umlenkspiegel reflektierte Verschmutzungsmessungsstrahl unter veränderlichem Winkel auftrifft.

## Patentansprüche

1. Vorrichtung zum Orten von in einen zu überwachenden Raumbereich eindringenden Objekten mit einem Gehäuse (1), das einen Sender (3) und einen Empfänger (4) für optische Strahlung sowie eine drehbare optische Umlenkeinrichtung (8) mit einem um eine Drehachse (10) drehbaren und gegenüber dieser geneigten Sendeumlenkspiegel (11) sowie einen Empfangsumlenkspiegel (12) enthält. wobei ein durch ein Fenster (2) im Gehäuse (1) ausfallendes Strahlenbündel (5) durch den Sendeumlenkspiegel (11) in den zu überwachenden Raumbereich gelenkt und aus dem Raumbereich reflektierte, durch das Fenster (2) einfallende Strahlung (16) durch den Empfangsumlenkspiegel (12) auf den Empfänger (4) gelenkt wird, **dadurch gekennzeichnet, daß** das Fenster (2) in Form eines Kugelausschnitts (18) ausgebildet ist, dessen Mittelpunkt der Schnittpunkt der Drehachse (10) mit den optischen Achsen des ein- und ausfallenden Strahlenbündels (5, 16) ist, wobei der Sende- und der dazu senkrechte Empfangsumlenkspiegel (11, 12) in einem Winkel von 45° zur Drehachse (10) angeordnet sind.

2. Vorrichtung nach Anspruch 1, **dadurch gekennzeichnet, daß** das Fenster (2) einen sich in Richtung der Konvexität des Fensters (2) erstreckenden, um die Drehachse (10) umlaufenden Randbereich (19') aufweist, wobei entlang des Randbereichs (19') eine Vielzahl von Empfängern (21) vorgesehen ist, die optische Strahlung von einer im Gehäuse (1) angeordneten Verschmutzungsmessungssenderanordnung (22) empfängt.

3. Vorrichtung nach Anspruch 2, **dadurch gekennzeichnet, daß** spiegelbildlich zu dem Randbereich (19'), entlang dem die Empfänger (21) angeordnet sind, ein weiterer Randbereich (19") vorgesehen ist, den die optische Strahlung der Verschmutzungsmessungssenderanordnung (22) passiert.

4. Vorrichtung nach Anspruch 3, **dadurch gekennzeichnet, daß** benachbart zu dem weiteren Randbereich (19") eine Vielzahl von Verschmutzungsmessungssendern (23) angeordnet ist.

5. Vorrichtung nach einem der Ansprüche 2 bis 4, **dadurch gekennzeichnet, daß** mehrere Verschmutzungsmessungssender (23) im Multiplexbetrieb mit jeweils einem Empänger (21) zusammenwirken.

6. Vorrichtung nach Anspruch 2 oder 3, **dadurch gekennzeichnet, daß** die Verschmutzungsmessungssenderanordnung (22) einen Verschmutzungsmessungssender bzw. einen aus dem Strahlenbündel (5) ausgeblendeten Verschmutzungsmessungsstrahl und einen sich drehenden Umlenkspiegel umfaßt.

7. Vorrichtung nach Anspruch 6, **dadurch gekennzeichnet, daß** der Umlenkspiegel mit der Umlenkeinrichtung drehbar ist.

8. Vorrichtung nach Anspruch 6 oder 7, **dadurch gekennzeichnet, daß** zwischen Umlenkspiegel und den Empfängern (21) eine gleichmäßig rückstreuende Fläche im Gehäuse (1) angeordnet ist, auf die der vom Umlenkspiegel reflektierte Verschmutzungsmessungsstrahl unter veränderlichem Winkel auftrifft.

## Claims

1. Apparatus for the localisation of objects penetrating a monitored space with a housing (1) which incorporates a transmitter (3) and a receiver (4) suitable for optical radiation as well as a rotatable optical diverting mechanism (8) with a transmission diversion mirror (11) inclined towards and rotatable around a rotation axis (10) as well as a receiver diversion mirror (12), whereby a bundle of rays (5) exits through a window (2) contained within the housing (1) and is diverted via the transmission diversion mirror (11) into the monitored space, and whereby radiation (16) entering through the said window (2) after being reflected from the said space is routed via the receiver diversion mirror (12) towards the receiver (4), **characterised in that** the window (2) is shaped in the form of a spherical cut-out (18) whose central point is represented by the intersection point of the rotation axis (10) and the optical axis of the incoming and exiting bundles of rays (5, 16), whereby the transmitter and the receiver diversion mirror (11, 12) that is positioned vertically in relation to the same are arranged at an angle of 45° to the rotation axis (10).

2. Apparatus according to Claim 1, **characterised in that** the window (2) incorporates a circumferential edge area (19') around the rotation axis (10) that extends in the direction of the convexity of the window (2), whereby the said edge area (19') incorporates a series of receivers (21) that will receive the optical radiation emitted by a contamination measuring apparatus (22) located within the housing (1).

3. Apparatus according to Claim 2, **characterised in that** within the area of the mirror image of the edge area (19') along which the receivers (21) are arranged a further edge area (19") is located through which the optical radiation emitted by the contamination measuring apparatus (22) passes.

4. Apparatus according to Claim 3, **characterised in that** a series of contamination measuring transmitters (23) are located adjacent to the further edge area (19").

5. Apparatus according to the preceding Claims 2 to 4, **characterised in that** several contamination measuring transmitters (23) are operated in a multiplexer operation together with one receiver (21) each.

6. Apparatus according to Claim 2 or 3, **characterised in that** the contamination measuring apparatus (22) further includes a contamination measuring transmitter, i.e. a contamination measuring ray separated out from the bundle of rays (5) as well as a rotating diversion mirror.

7. Apparatus according to Claim 6, **characterised in that** the diversion mirror is rotatable together with the diversion mechanism.

8. Apparatus according to Claim 6 or 7, **characterised in that** an evenly reflecting area is located within the housing (1) between the diversion mirror and the receivers (21) onto which the contamination measuring ray reflected from the diversion mirror is directed at a changeable angle.

## Revendications

1. Dispositif pour localiser des objets pénétrant dans un espace à surveiller comprenant un boîtier (1) qui contient un émetteur (3) et un récepteur (4) de rayonnement optique, ainsi qu'un dispositif de déviation (8) rotatif avec un miroir de déviation d'émission (11) pouvant tourner autour d'un axe de rotation (10) et incliné par rapport à celui-ci, ainsi qu'un miroir de déviation de réception (12), un faisceau de rayons émergent (5) à travers une fenêtre (2) dans le boîtier (1) étant dirigé par le miroir de déviation d'émission (11) dans la zone à surveiller et le rayonnement incident (16) à travers la fenêtre (2), réfléchi à partir de l'espace, étant dirigé par le miroir de déviation de réception (12) sur le récepteur (4), **caractérisé en ce que** la fenêtre (2) est conçue en forme de secteur sphérique (18) dont le centre est le point d'intersection de l'axe de rotation (10) et des axes optiques des faisceaux de rayons incident et émergent (5, 16), le miroir de déviation d'émission et le miroir de déviation de réception qui lui est perpendiculaire (11, 12) étant disposés en formant un angle de 45° par rapport à l'axe de rotation (10).

2. Dispositif selon la revendication 1, **caractérisé en ce que** la fenêtre (2) présente une zone de bordure (19') s'étendant dans la direction de la convexité de la fenêtre (2), tournant autour de l'axe de rotation (10), une pluralité de récepteurs (21) prévus le long de la zone de bordure (19') recevant le rayonnement optique d'un agencement émetteur de mesure de pollution (22) disposé dans le boîtier (1).

3. Dispositif selon la revendication 2, **caractérisé en ce qu'**il est prévu, de manière symétrique à la zone de bordure (19') le long de laquelle les récepteurs (21) sont disposés, une autre zone limite (19") que passe le rayonnement optique de l'agencement émetteur de mesure de pollution (22).

4. Dispositif selon la revendication 3, **caractérisé en ce qu'**une pluralité d'émetteurs de mesure de pollution (23) sont disposés de manière contiguë à l'autre zone de bordure (19").

5. Dispositif selon l'une des revendications 2 à 4, **caractérisé en ce que** plusieurs émetteurs de mesure de pollution (23) coopèrent chacun avec un récepteur (21) en mode multiplex.

6. Dispositif selon la revendication 2 ou 3, **caractérisé en ce que** l'agencement émetteur de mesure de pollution (22) comprend un émetteur de mesure de pollution, respectivement un rayon de mesure de pollution diaphragmé du faisceau de rayons (5) et un miroir de déviation tournant.

7. Dispositif selon la revendication 6, **caractérisé en ce que** le miroir de déviation peut tourner avec le dispositif de déviation.

8. Dispositif selon la revendication 6 ou 7, **caractérisé en ce qu'**une surface de rétrodiffusion régulière, sur laquelle le rayon de mesure de pollution réfléchi par le miroir de déviation arrive sous un angle variable, est disposée entre le miroir de déviation et les récepteurs (21) dans le boîtier (1).
